# EUROPEAN PATENT APPLICATION

(11) **EP 1 652 962 A1**
(43) Date of publication of application: **03.05.2006**
(21) Application number: 05256551.2
(22) Date of filing: 21.10.2005
(51) Int. Cl.: C23C 18/16, H02K 15/00, H02K 3/24, H02K 9/00

(54) **Electroless metallic plating method for leak repair and prevention in liquid-cooled generator stator bars**

(30) Priority: 02.11.2004 US 978478
(71) Applicant: GENERAL ELECTRIC COMPANY, Schenectady, New York 12345 (US)
(72) Inventor: Wang, Yu, Clifton Park, New York 12065 (US)
(74) Representative: Pedder, James Cuthbert

(57) **Abstract**

A method of sealing a stator bar with an interior liquid pass for flow of coolant forming at least a portion of the stator bar includes electroless plating at least a portion of an interior wetted surface of the stator bar.

## Description

Water-cooled stator bars for electrical generators are comprised of a plurality of small rectangular solid and hollow copper strands brazed to one another to form a bar. The ends of the strands are brazed to an end fitting, typically referred to as stator bar clip. A cover is brazed to the clip window. The end fitting serves as both an electrical and a cooling flow connection for the stator bar.

The hollow end fitting typically includes an enclosed chamber for ingress or egress of stator bar cooling liquid, typically deionized water. At one end, the end fitting receives the ends of the strands of the stator bar. The fitting and the peripherally outermost copper strands of the stator bar are brazed to one another. The opposite end of the fitting is connected to a stator cooling conduit.

Liquid cooled stator bar clips have gone through design changes over the years. However, they typically contain mixed solid and hollow strands brazed to one another, and a cover brazed to a clip window. During operation, the hollow strands carry water to cool off the bar. Over time, leaks can develop about the connection between the stator bar ends and the stator bar fitting, between cover and clip as well as between adjacent strands. Leaks may also occur at various plumbing connections. It is believed that the major leak mechanism is a crevice corrosion process which initiates in the braze alloy at the interior surface of the braze joint. Crevice corrosion is a localized form of corrosion usually associated with a stagnant solution on the micro-environmental level. Such stagnant microenvironments tend to occur in crevices such as micro surface voids formed during brazing, especially at the boundary of strands and braze alloy. Crevice corrosion is initiated by changes in local chemistry within the crevice, such as shift to phosphorous acid conditions in the crevice. Stagnant water in the chamber of the fitting is in contact with the braze alloy and the copper strands. This coolant contact with the braze joint and cooper strands is believed to cause corrosion and consequent leakage.

Field repair of coolant leaks through the stator bar end connections has been moderately successful. A leak site is identified by several different tests, such as vacuum decay and traceable Helium test.

An epoxy barrier coating method has been used as a leak repair and prevention method. An example of an epoxy barrier coating method is disclosed in U.S. Patent No. 5,605,590. This epoxy barrier coating has been applied to provide protection against water initiated corrosion mechanisms along the brazed length of the strand package. Epoxy coating is manually injected. Visibility is impaired when looking into the clip of a stator bar. Plugged cooling strands may possibly result. Thus, the process is labor intensive and requires 100% inspection. Also, it is difficult with certain clip designs to achieve visual and injection access. As a result, the process can be labor intensive, takes a long time to complete.

There are also other leak issues in liquid cooled generators. Indeed, there are many types of leaks associated with water-cooled generators. Stator bar end crevice corrosion is the major one. But other leaks are caused by porosity, cracking and localized damage during manufacturing rather than as a result of corrosion.

There is a need for an improved method for leak repair and prevention in liquid-cooled generators. In particular, there is a need for corrosion protection at the junction between the stator bars and their clips. The corrosion protection should be robust and be applicable to various stator bar clip designs, including clips for recessed braze, flush braze and raised hollow strand braze designs. There is also a need for an improved method to repair and prevent leaks within the generator water pass that arise from other causes.

This invention presents a special coating method to deposit a layer of material over the interior surface of coolant flow path of liquid-cooled generator stator. The coating covers stator bar hollow strands, strand braze junctions, stator bar end fitting connections and plumbing from direct contacting of coolant water to eliminate and prevent leaks. Furthermore, the invention provides a corrosion resistant coating that can be applied to in-service generators without disassembly of the machine.

More specifically, the invention proposes an electroless (autocatalytic) plating method to deposit a thin metallic barrier coating layer on the entire interior surface of liquid-cooled stator bars' water pass or selectively on target areas with high corrosion risks or otherwise having a high leak potential. The metallic layer provides a corrosion resistant barrier coating to prevent water access to corrosion susceptible region(s) such as clip-to-strand braze joints. Concurrently the coating has the capability to repair and prevent substantially all other types of leaks. Different materials may be deposited, such as copper or nickel as the metallic barrier coating. The considerations relating to the choice of material(s) include corrosion/erosion resistance, coating bond strength, cost, and process variability. In this regard, copper may be more compatible as a coating from a thermal expansion point of view. Also, copper will not corrode and would thus be an effective coating to cover the interface between the copper and braze alloy, which is susceptible to corrosion.

Thus, the invention may be embodied in a method of sealing a stator bar with an interior liquid pass for flow of coolant forming at least a portion of said stator bar, comprising electroless plating at least a portion of an interior wetted surface of said stator bar.

The invention may also be embodied in a method of sealing a junction of a stator bar end and a fitting receiving the end, to define a corrosion resistant seal substantially impermeable to liquid, the fitting having a chamber for receiving a liquid through an opening in the fitting and in communication with hollow strands forming at least a portion of said stator bar end for flow of the liquid through the hollow strand, the method comprising the steps of: flowing an electroless plating solution into and through said chamber of said fitting, said electroless plating solution flowing from a source of electroless plating solution comprising metal ions and a reducing agent.

Further, the invention may be embodied in a stator bar end and a fitting receiving the end to define a seal substantially impermeable to liquid, the fitting having a chamber for receiving a liquid through an opening in the fitting and in communication with hollow strands forming at least a portion of said stator bar and for flow of the liquid through the hollow strands, wherein at least a portion of an interior surface of said fitting has a metallic layer disposed on a surface thereof, wherein said metallic layer is deposited by electroless plating.

The invention will now be described in greater detail, by way of example, with reference to the drawings, in which:-
FIGURE 1 is a schematic illustration of a liquid-cooled stator winding arrangement illustrating the stator bars and end fittings coupled to inlet and outlet coolant headers;
FIGURE 2 is a representative end cross-sectional view of the strands of a stator bar within an end fitting; and
FIGURE 3 is a schematic illustration of a stator bar coupled to a source of solution(s) associated with electroless plating, in an embodiment of the invention.

Water-cooled stator bars for electrical generators are comprised of a plurality of small rectangular solid and hollow copper strands which are brazed to one another and brazed to an end fitting. The end fitting serves as both an electrical and a hydraulic connection for the stator bar. The end fitting typically includes an enclosed chamber for ingress or egress of stator bar cooling liquid, typically deionized water. Another opening of the end fitting receives the ends of the strands of the stator bar, the fitting and peripherally outermost copper strands of the stator bar being brazed to one another. Over time, leaks have variously developed about the connection between the stator bar ends and the stator bar fitting as well as between adjacent strands. It is believed, based on leak analysis results, that the leak mechanism is due to a crevice corrosion process which initiates in the braze alloy at the interior surface of the braze joint. Crevice corrosion is initiated by changes in local chemistry within the crevice, such as shift to phosphorous acid conditions in the crevice.

There are also other leak issues in liquid cooled generators. Examples of other leaks in addition to the clip crevice corrosion leaks are clip crack leaks, clip window leaks, plumbing and fitting leaks, and connection ring leaks.

Field repair of leaks through the stator bar end connections has only been moderately successful.

In an embodiment of the invention, electroless (autocatalytic) plating method is proposed to deposit a thin layer of metallic barrier coating on the entire interior surface of liquid-cooled stator bars' water pass, or selectively on target areas, e.g., with high corrosion risks or otherwise having a high leak potential. The metallic layer provides a corrosion resistant barrier coating to prevent water access to corrosion susceptible region(s) such as clip-to-strand braze joints. Concurrently the coating has the capability to repair and prevent substantially all other types of leaks. Different materials may be deposited, such as copper or nickel as the metallic barrier coating.

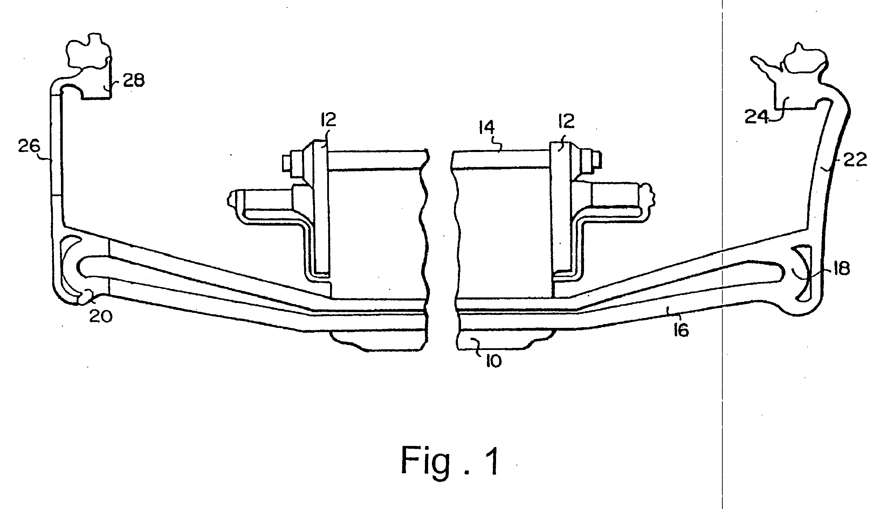

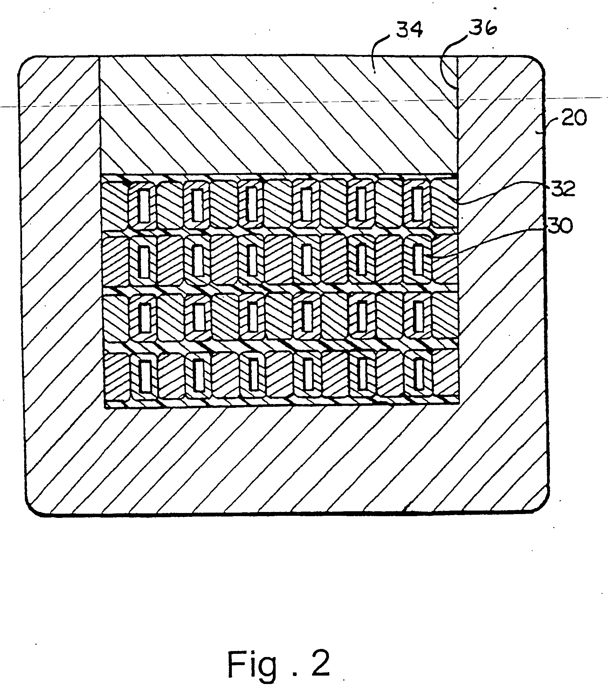

Referring now to the drawings, particularly to FIGURE 1, there is illustrated a liquid-cooled stator winding arrangement used in a typical liquid-cooled generator. A stator core 10 having stator core flanges 12 and core ribs 14 are illustrated, with stator bars 16 passing through radially extending slots and terminating at opposite ends in end fittings 18 and 20. Inlet hoses 22 connect an inlet fitting 18 to an inlet coolant header 24. Outlet hoses 26 connect the outlet fitting 20 to an outlet coolant header 28. As illustrated in FIG. 2, each stator bar includes a plurality of hollow and solid copper strands 30 and 32, respectively, disposed in side-by-side and superposed relation one to the other. The fitting, for example, fitting 20, is similarly formed of an electrically conductive material such as copper. The fitting comprises a closed body having a rectilinear opening at one end for receiving the strands of the stator bar 16. At the opposite end, there is provided an opening which in use is normally closed by a copper tube which serves as both an electrical connection, as well as a hydraulic conduit for flowing liquid coolant, e.g., deionized water, into or from the chamber defined by the fitting 20 and the exposed ends of the hollow and solid copper strands. The liquid in the chamber either flows into the fitting and through the hollow strands 30 for cooling purposes when the fitting comprises an inlet fitting or receives the liquid coolant from the hollow strands 30 for egress when the fitting is employed as an outlet fitting. As mentioned above, the solid and hollow strands 32, 30 are brazed to one another, and a cover 34 is brazed to clip window 36. These junctions are among the potential sites for leaks over time.

As noted above, electroless plating is proposed to deposit a metallic barrier coating on the interior surface of liquid-cooled stator bars' water pass, or selectively on target areas.

Electroless plating requires a clean surface and activation. One formulation for an activator is as follows: 3ml palladium solution, 30 ml hydrochloric acid, and 70 ml water. The activator is applied to surface, rinse, then dry. The plating uses a redox reaction to deposit metal on an object without the passage of an electric current. No anodes, power supply, or electrical connection of any kind are required. Instead, the electroless plating process simply entails mixing together the copper solution and the reducing agent for copper, heating them to just off the boil, and then bathing the part to be plated. An autocatalytic electrochemical reaction takes place and the metal is evenly deposited all over the part being plated. One example of the copper solution formulation is 15 grams/liter Copper nitrate, 10 grams/liter sodium bicarbonate, 30 grams/liter Rochelle salts, and 20 grams/liter sodium hydroxide. An example of the reducing agent for copper is 50 ml/ liter of formaldehyde solution. There are many commercial mixtures available. Various additives can be added to improve the coating quality. The thickness of the plate will depend on the duration of exposure. The reaction is stopped by ceasing the exposure, such as by removing the part from the solution. Because it allows a constant metal ion concentration to bathe all exposed parts of the object, electroless plating deposits metal evenly along edges, inside holes, and over irregularly shaped objects which are difficult to place evenly with electroplating.

The electroless plating process involves the reduction of a complexed metal using a mild reducing agent. There are several metals that can be electroless plated, including palladium (pd), copper, nickel, and silver. The most common metals for this process are nickel and copper. Thus, by way of example, copper can be plated by reducing complexed copper with formaldehyde in alkaline solution. The reaction is catalyzed by palladium, which is deposited on the surface in extremely small amounts in a previously step. Nickel is usually plated from hypophosphite bath on activated surfaces. The surfaces are activated by a colloidal mixture of tin chloride and palladium. Electroless nickel plates at an approximate rate of 1 mil (1/1000 inch) per hour. There are of course limitations regarding the use of electroless plating. For example, as the plating solution is used, the metal depletes from the solution, so that at least periodic replenishment may be required. Moreover, Copper plating is more limited in its application since the reducing agent for copper plating is formaldehyde which is a carcinogenic material.

Nevertheless, electroless plating has notable advantages over other coating processes. For example, electroless plating provides a uniform deposition and can be applied over both conductive and non-conductive surfaces. Also, it is possible to selectively plate utilizes a special auto catalytic base coat which is applied to areas where plating is desired. The chemical makeup of the base coat allows, e.g., copper metal to be drawn out of solution and deposited onto the special base coat uniformly. It is also possible to overplate the plated component. For example, a subsequent step of over plating nickel will provide environmental stability for plated copper and will enhance erosion resistance. Additionally, overall electroless copper/nickel plating is a cost effective shielding system for internal components. The overall plating process eliminates the autocatalytic base coat and just plates all exposed surfaces.

As noted above, in electroless plating, metal ions are reduced to metal by the action of chemical reducing agents which are simply electron donors. The metal (i.e., nickel, copper, etc.) ions are electronic receptors which react with the electron donors. The catalyst is the part's metallic surface which accelerates the electroless chemical reaction following oxidation of the reducing agent.

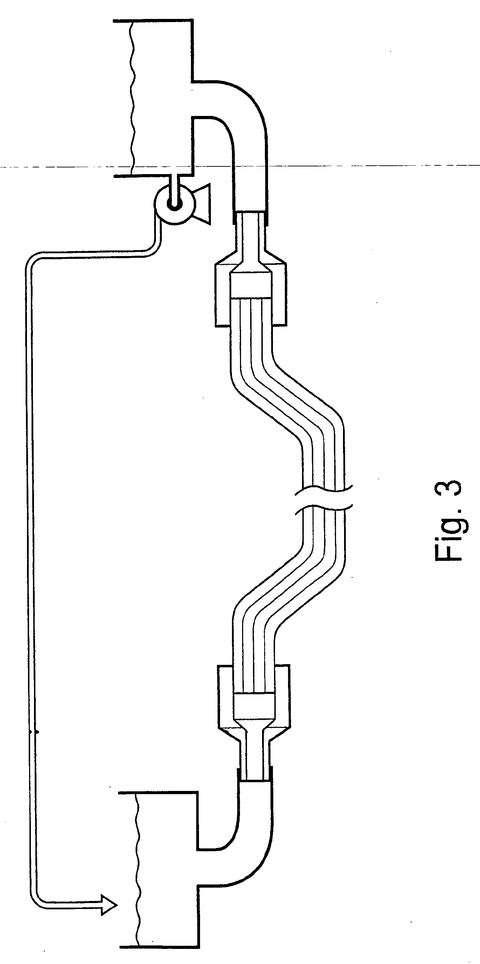

Thus, to electroless plate, e.g. the liquid-cooled generator stator bars' water pass, the system will be drained, rinsed and dried. Then, target inside surfaces of liquid-cooled generator stator bars' water pass and/or other areas to be plated are carefully cleaned, such as flushed with abrasive solution. After draining, rinsing, and drying, the water pass is prepared to provide a catalyzed surface. In this regard, the water pass will be flushed (FIG. 3) with solutions that react to precipitate a catalytic metal, palladium for example, in situ. First, the water pass is filled with an acidic stannous chloride solution, and then with a solution of palladium chloride. The palladium is reduced to its catalytic metallic state by the tin. Another way of producing a catalytic surface is to fill the water pass with a colloidal solution of palladium followed by filling with an accelerator solution.

Rather than plating the entire water pass interior surfaces, particularly corrosion susceptible areas, such as the clip-to-strand braze joint, or other target areas can be applied with special autocatalytic base coat. The mechanical makeup of the base coat allows metal to be drawn out of solution and deposited thereon uniformly. A typical application method for the autocatalytic base coat would be remote spray. Since the remote spray does not have to be too precise, it is easy to fish in a small spray header through the flexible line without substantial disassembly. Once the inside surface of the liquid-cooled generator stator bars are properly prepared as aforesaid, the entire water pass is flooded with the electroless solution (FIG. 3), and a uniform deposition begins.

It should be noted that if it is anticipated that air or evolved gas may become trapped, e.g., in a crevice or a blind recessed area, it will prevent electroless deposition in such areas and pressure treatment may be necessary. Pressure treatment may be applied by defining the water pass system as a closed loop that can be sealed and pressurized if deemed necessary or desirable.

The electroless plating process is continued until a electroless deposit layer of about 1 to 5 mils is achieved. In this regard, electroless deposition will continue provided that the metal ion and reducing agent are replenished. Thus, to ensure that electroless deposition continues as deemed necessary or desirable, the metal ion and reducer concentration should be monitored and controlled to maintain proper ratios as well as overall chemical balance of the plating solution, in a known manner.

The electroless plating deposition rate itself is a function of temperature, pH and metal ion/reducer concentration. The thickness of the electroless deposit depends on the deposition rate and the length of time the part is immersed in the solution. A typical deposition rate is about 4 to 16 microns/h.

It is to be understood that the electroless coating process may be carried out before stator assembly or after stator assembly. Albeit with greater advantage in the later instance.

Moreover, the plating film may be formed as a double-layered film including a first film and a second film applied over the first film. As will appreciated, a double layered film provides enhanced durability as compared to a single layered plating particularly where the plating coatings have selective properties, for example, an underlying plated film having strong corrosion resistance and a second film applied for air tightness, durability and corrosion resistance.

As a further alternative, the water pass of the stator bars, for example, may be plated before assembly and other parts of the water pass plated following assembly, to effectively provide a double layered plating in certain areas or on certain parts, but not on or in the entire assembly.

In accordance with this invention, all of the joints which have the potential for forming a leakage path can be electroless plated. In this way, the existing leak or leaks at the stator bar end connections of a generator in the field are repaired. Additionally, by providing a protective coating to all potential leakage paths, a seal is provided which will ensure against the formation of leakage paths in the future. That is, the electroless plating not only isolates the liquid coolant from the brazing material and seals between the joints of adjacent strands and the outermost strands, but can be used to deposit a layer of material over, to seal, the entire interior surface of the coolant flow path, whereby all potential leakage paths are sealed to prevent future leaks. While the present invention is particularly applicable to field repairs of existing generators, it may also be applied to generators during initial manufacture to provide protection against future leakage.

As noted above, since the method disclosed herein is capable of applying a coating over the entire wetted surface of the flow system, the method can address the clip crevice corrosion leak issue and also other leak issues in liquid cooled generators. For example, the method embodying the invention may used to address clip crack leaks, clip window leaks, plumbing and fitting leaks, and connection ring leaks.

## Claims

1. A method of sealing a stator bar (16) with an interior liquid pass for flow of coolant forming at least a portion of said stator bar (16), comprising electroless plating at least a portion of an interior wetted surface of said stator bar (16).

2. A method as in claim 1, wherein before said electroless plating, at least target inside surfaces of said stator bar (16) water pass are cleaned and the water pass is prepared to provide a catalyzed surface.

3. A method as in claim 2, wherein a catalyzed surface is produced by flushing the water pass with solutions that react to precipitate a catalytic metal in situ.

4. A method as in claim 3, wherein the water pass is filled with an acidic stannous chloride solution, and then with a solution of palladium chloride.

5. A method as in claim 3, wherein the water pass is filled with a colloidal solution of palladium followed by filling with an accelerator solution.

6. A method as in claim 1, wherein select areas of the water pass interior surface are applied with an autocatalytic base coat.

7. A method as in claim 1, wherein the electroless plating process is continued until a deposit layer of about 1 to 5 mils is achieved.

8. A method as in claim 1, wherein the electroless process is carried out after stator assembly.

9. A method as. in claim 1, wherein a double-layered plating film is formed on said surface, including a first film and a second film applied over the first film.

10. A method of sealing a junction of a stator bar (16) end and a fitting (18,20) receiving the end, to define a corrosion resistant seal substantially impermeable to liquid, the fitting (18,20) having a chamber for receiving a liquid through an opening in the fitting (18,20) and in communication with hollow strands (30) forming at least a portion of said stator bar (16) end for flow of the liquid through the hollow strand, the method comprising the steps of flowing an electroless plating solution into and through said chamber of said fitting (18,20), said electroless plating solution flowing from a source of electroless plating solution comprising metal ions and a reducing agent.
